# EUROPÄISCHE PATENTSCHRIFT

(11) **EP 2 431 241 B1**
(45) Veröffentlichungstag und Bekanntmachung des Hinweises auf die Patenterteilung: **01.05.2013**
(21) Anmeldenummer: 11007342.6
(22) Anmeldetag: 09.09.2011
(51) Int. Cl.: B60T 7/02, B60T 7/04, B60T 7/12, B60T 17/22, G01M 13/02, G01M 17/007, G05G 1/487, G05G 1/54, B60T 7/06, B60T 7/16

(54) **Aktuatorvorrichtung mit Notausfunktion**
Actuator device with emergency stop function
Dispositif d'actionneur doté d'une fonction d'arrêt d'urgence

(30) Priorität: 17.09.2010 DE 102010045786
(43) Veröffentlichungstag der Anmeldung: 21.03.2012
(73) Patentinhaber: Stähle, Kurt, 75242 Neuhausen-Steinegg (DE)
(72) Erfinder: Stähle, Kurt, 75242 Neuhausen-Steinegg (DE)
(74) Vertreter: Wacker, Jost Oliver

(56) Entgegenhaltungen:
- DE-A1- 4 240 756
- DE-A1- 10 012 757
- FR-A1- 2 507 556
- FR-A3- 2 893 550
- US-A- 3 662 593
- US-A- 5 821 718

## Beschreibung

Die Erfindung betrifft eine Aktuatorvorrichtung zur Betätigung wenigstens eines Fußpedals, wie eines Brems-, Gas- oder Kupplungspedals, eines Kraftfahrzeugs nach dem Oberbegriff des Anspruchs 1. Die Aktuatorvorrichtung weist hierzu wenigstens ein Betätigungselement auf, das zur wiederkehrenden Beaufschlagung des Fußpedals mittels eines Stellantriebes zwischen einer Beaufschlagungsstellung und einer Freigabestellung verlagerbar ist. Zudem weist die Aktuatorvorrichtung eine Notausvorrichtung auf, mittels der das wenigstens eine Fußpedal in eine Notausstellung verlagerbar ist, in der es bei einem vordefinierten Notfall gehalten werden soll. Dabei ist die Notausvorrichtung an der Aktuatorvorrichtung zwischen einer Aktivstellung und einer Passivstellung verstellbar gelagert. Ein Notfall kann beispielsweise dadurch gegeben sein, dass während der Verwendung der Aktuatorvorrichtung die Versorgungsspannung abfällt oder vollständig ausfällt, so dass die Aktuatorvorrichtung nicht mehr oder nicht ausreichend genau steuerbar ist. Abhängig von der Art des betreffenden Fußpedals kann die Notausstellung dabei, wie beispielsweise bei einem Brems- oder Kupplungspedal durch die Beaufschlagungsstellung, oder wie im Falle eines Gaspedals durch die Freigabestellung gebildet sein.

Derartige Aktuatorvorrichtungen werden benötigt, um beispielsweise Funktions- oder Dauertests der Fußpedale eines Kraftfahrzeuges, wie Gas-, Kupplungs- und Bremspedal durchzuführen oder das Fahrzeug automatisiert beziehungsweise teilautomatisiert zu fahren. Hierbei führt die Aktuatorvorrichtung wiederkehrende Bewegungsabläufe zur Beaufschlagung des wenigstens einen Fußpedals aus, die der tatsächlichen Betätigung der Fußpedale bei dem zu erwartenden Gebrauch des Fahrzeuges weitestgehend entsprechen. Eine deartige Vorrichtung ist in US 3 662 593 A1 veröffentlicht.

DE 100 12 757 A1 beschreibt eine Notausvorrichtung, bei der ein Notaus-Stellglied mit dem eigentlichen Stellglied mitgeführt ist. Das Notaus-Stellglied ist dabei mittels einer Feder vorgespannt und durch eine Auslöseeinrichtung in einer Passivstellung gehalten. Im Falle einer Notbremsung wird die Auslöseeinrichtung mittels eines Elektromagneten geöffnet und das Notaus-Stellglied dadurch mittels der Feder gegen das Bremspedal gedrückt.

EP 0236518 A1 beschreibt eine Vorrichtung zur automatischen Bewegung eines Kraftfahrzeugbetätigungsteils. Diese weist ein an einem Gelenkhebel gehaltenes Betätigungsendstück auf, dessen Bahnkurve so gewählt ist, dass diese näherungsweise der Pedalbewegung des zu betätigenden Fußpedals folgt.

In DE 42 40 756 A1 ist ein Stand der Technik beschrieben, der eine Aktuatorvorrichtung für ein Gaspedal eines Fahrzeugs zum Gegenstand hat. Für den Fall, dass die Spannungsversorgung eines Steuergerätes ausfällt, ist dabei eine Notausvorrichtung vorgesehen, die ein Stellglied zum Betätigen des Gaspedals im Notfall von diesem wegzieht. Die Notausvorrichtung weist hierzu ein mechanisches Teil auf, wie eine Feder, die das Stellglied mittels elastischer Rückstellkräfte von dem Gaspedal weg beaufschlagen kann.

In der Regel werden derartige Aktuatorvorrichtungen nicht nur für einen bestimmten, sondern für verschiedene Tests verwendet. Je nach Art des Tests kann es dabei notwendig oder erwünscht sein, dass es während der Verwendung der Aktuatorvorrichtung zu keiner Betätigung des Fußpedals mittels der Notausvorrichtung kommen kann. In einem solchen Fall muss bei den bekannten Aktuatorvorrichtungen die Notausvorrichtung oder wenigstens Teile davon ausgebaut werden, was einen relativ hohen Zeitverlust und Arbeitsaufwand zwischen zwei Tests verursachen kann.

Die Aufgabe der Erfindung ist es, bei einer gattungsgemäßen Aktuatorvorrichtung die genannten Nachteile zu vermeiden und einen einfachen Wechsel zwischen dem Betrieb der Aktuatorvorrichtung mit und ohne Notausfunktion zu ermöglichen.

Diese Aufgabe wird durch eine Aktuatorvorrichtung mit den Merkmalen des Anspruchs 1 gelöst. In der Aktivstellung erzeugt die Notausvorrichtung dabei eine vom Stellantrieb überwindbare Vorspannung an dem Betätigungselement, durch die das Fußpedal auch ohne Unterstützung des Stellantriebes mittels der Notausvorrichtung in die Notausstellung verlagerbar ist, während in der Passivstellung eine Verlagerung des Fußpedals in die Notausstellung mittels der Notausvorrichtung unterbunden ist. Hierdurch kann die Aktuatorvorrichtung durch bloße Positionsverlagerung der Notausvorrichtung bedarfsweise mit oder ohne Notausfunktion betrieben werden. Umbaumaßnahmen an der Aktuatorvorrichtung sind hierbei nicht erforderlich.

In einer besonders vorteilhaften Ausführungsform weist die Notausvorrichtung eine Federeinrichtung auf, die mittels einer Handhabe zwischen der Aktivstellung und der Passivstellung verlagerbar ist. Hierdurch ist die Notausfunktion der Aktuatorvorrichtung in besonders komfortabler Weise verlagerbar und dadurch zu- und abschaltbar.

Dabei ist es günstig, wenn die Federeinrichtung an einer verstellbaren Lagervorrichtung gehalten ist und in der Aktivstellung eine Vorspannung aufweist, die die Lagervorrichtung in eine erste Lagerposition drückt. Auf diese Weise wird sichergestellt, dass die Notausvorrichtung stabil in der Aktivstellung gehalten werden kann.

Vorteilhafterweise ist die Lagervorrichtung durch einen mittels der Handhabe verstellbaren Kniehebel gebildet, wodurch die veränderbare Lagerung der Notausvorrichtung mit relativ einfachen und dadurch kostengünstigen konstruktiven Maßnahmen erzielt werden kann.

Zudem ist es günstig, wenn die Lagervorrichtung einen zwischen der Aktivstellung und der Passivstellung verschiebbaren Schlitten aufweist, an dem die Federeinrichtung gehalten ist. Hierdurch wird eine besonders stabile verschiebbare Lagerung der Notausvorrichtung ermöglicht.

Vorteilhafterweise weist die Federeinrichtung eine Gasdruckfeder auf, wodurch trotz relativ geringem Platzbedarf seitens der Federeinrichtung relativ große Stellkräfte auf das betreffende Betätigungselement oder direkt auf das betreffende Pedal abgegeben werden können, um dieses in die Notausstellung zu verbringen.

Ferner ist es günstig, wenn das Betätigungselement durch die Notausvorrichtung in die Beaufschlagungsstellung vorgespannt ist. Hierdurch kann beispielsweise ein Brems- oder Kupplungspedal, an dem das betreffende Betätigungselement ausgefallen ist, direkt oder unter Zwischenlage des Betätigungselementes in die Beaufschlagungsstellung verbracht werden, die der Notausstellung entspricht.

Alternativ hierzu ist es günstig, wenn das Betätigungselement durch die Notausvorrichtung in die Freigabestellung vorgespannt ist. Hierdurch kann beispielsweise ein Gaspedal, an dem das betreffende Betätigungselement ausgefallen ist, direkt oder unter Zwischenlage des Betätigungselementes in die Freigabestellung verbracht werden, die in diesem Fall der Notausstellung entspricht.

In den Figuren ist eine beispielhafte Ausführungsform der Erfindung dargestellt. Es zeigen:
- Figur 1: eine Ansicht einer erfindungsgemäßen Aktuatorvorrichtung mit einer Notausvorrichtung in Aktivstellung und
- Figur 2: eine Ansicht der Aktuatorvorrichtung mit der Notausvorrichtung in Passivstellung.

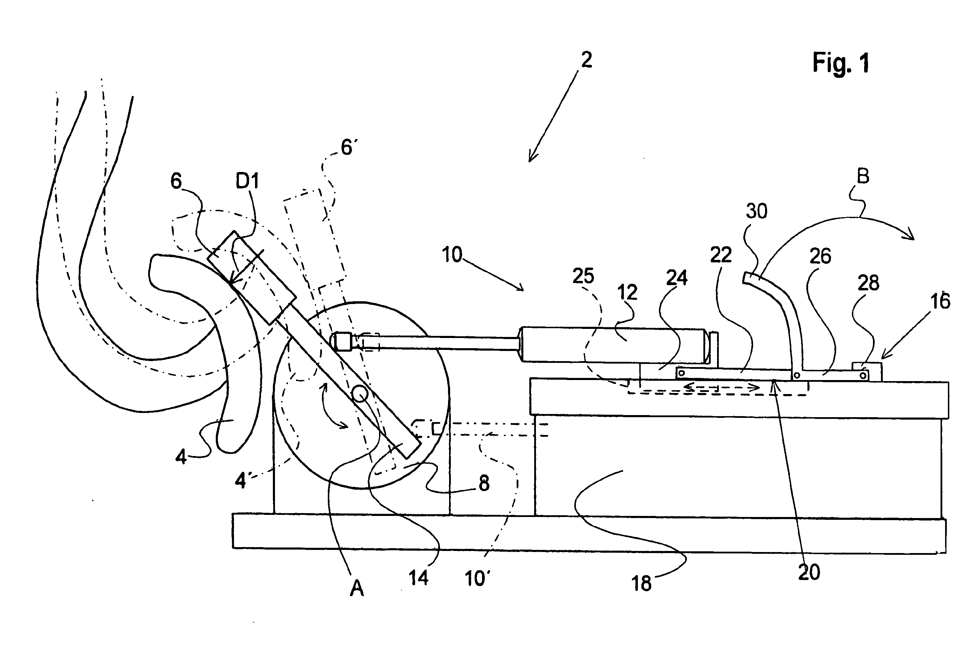

Fig. 1 zeigt eine Aktuatorvorrichtung 2, die zur Beaufschlagung wenigstens eines Fußpedals 4 eines Kraftfahrzeuges dient, wie beispielsweise im Zuge eines Dauertests oder zum automatisierten Betrieb des Kraftfahrzeuges. Die Aktuatorvorrichtung 2 weist hierzu für jedes zu betätigende Fußpedal 4 ein Betätigungselement 6 auf, das mittels eines Stellantriebes 8 zwischen einer durch durchgezogene Linien dargestellte Beaufschlagungsstellung und einer durch strichpunktierte Linien dargestellte Freigabestellung hin- und herbewegbar ist. Zur besseren Verständlichkeit ist in Fig. 1 dabei lediglich ein Betätigungselement 6 und ein Fußpedal 4, beispielhaft in Form eines Kupplungspedals, dargestellt. Darüber hinaus kann die Aktuatorvorrichtung alternativ oder zusätzlich wenigstens ein Betätigungselement 6 wie beispielsweise zur Betätigung eines Bremspedals oder Gaspedals aufweisen.

In der in Fig. 1 dargestellten Beaufschlagungsstellung des Betätigungselementes 6 drückt dieses mit einer Druckkraft D1 gegen das Fußpedal 4 und hält es in dieser gedrückten Stellung, die im Falle des Kupplungspedals einer getrennten Stellung der betreffenden Kupplung entspricht. Im Falle eines Bremspedals entspricht die gedrückte Stellung einer Bremsstellung und im Falle eines Gaspedals einer Gasgebestellung.

Soll sich das Fußpedal 4 dagegen in eine unbetätigte Ausgangsstellung gemäß 4' zurück verstellen können, so wird das Betätigungselement 6 durch den Stellantrieb 8 um eine Achse A herum in die durch strichpunktierte Linien dargestellte Freigabestellung gemäß 6' verschwenkt. Die Ausgangsstellung gemäß 4' des Fußpedals 4 entspricht dabei im Falle des Kupplungspedals einer gekuppelten Stellung der betreffenden Kupplung. Im Falle des Bremspedals wird die betreffende Bremse in dieser Stellung freigegeben und im Falle des Gaspedals der Kraftantrieb beendet.

Wie aus Fig. 1 ferner zu entnehmen ist, weist die Aktuatorvorrichtung 2 zusätzlich eine Notausvorrichtung 10 auf, mittels der das Fußpedal 4, wie dargestellt, über das Betätigungselement 6 beaufschlagbar ist. Die Notausvorrichtung weist hierzu eine Federeinrichtung 12 auf, die beispielhaft durch eine Gasdruckfeder gebildet ist. Diese drückt an einer von dem Fußpedal 4 abgewandten Seite gegen das Betätigungselement 6 und spannt es derart vor, dass es auch ohne Unterstützung des Stellantriebes 8 eine ausreichende Druckkraft D1 auf das Fußpedal 4 ausübt, um dieses in die gedrückte Stellung zu verlagern.

Die gedrückte Stellung entspricht dabei einer Notausstellung des Fußpedals 4, die in einem Notfall, wie beispielsweise bei Ausfall eines Steuerungssignals oder einer Versorgungsspannung, eingenommen werden soll, um beispielsweise im Falle des Kupplungspedals die Kupplung zu trennen oder im Falle des Bremspedals das Fahrzeug abzubremsen.

Im normalen Betrieb muss der Stellantrieb 8 somit ein ausreichendes Drehmoment erzeugen, um das Betätigungselement 6 entgegen der Vorspannung durch die Federeinrichtung 12 in die Freigabestellung gemäß 6' zu verlagern.

Im Falle des Gaspedals entspricht die Notausstellung des Fußpedals 4 im Gegensatz zum Kupplungs- oder Bremspedal der nicht gedrückten Stellung gemäß 4'. Um im Notfall auch diese Notausstellung des Fußpedals 4 gewährleisten zu können, kann eine entsprechende Notausvorrichtung 10', wie durch strichpunktierte Linie dargestellt, an einem bezüglich der Achse A von dem das Fußpedal 4 beaufschlagenden Teile des Betätigungselementes 6 abgewandten Arm 14 angreifen. Hierdurch kann das Betätigungselement 6 durch die Druckbeaufschlagung der alternativen Notausvorrichtung 10' von dem Fußpedal 4 weg vorgespannt werden. In diesem Fall muss der Stellantrieb 8 die Vorspannung der Notausvorrichtung 10 überwinden, wenn das Betätigungselement 6 von der Freigabestellung gemäß 6' in die dargestellte Beaufschlagungsstellung verbracht werden soll.

Wie aus Fig. 1 ferner zu entnehmen ist, weist die Notausvorrichtung 10 eine Lagervorrichtung 16 auf, an der die Federeinrichtung 12 gehalten ist. Diese Lagervorrichtung 16 weist eine Basis 18 auf, an der ein Kniehebel 20 gehalten ist. Der Kniehebel 20 ist an einem ersten Arm 22 mit einem Schlitten 24 verbunden, an dem die Federeinrichtung 12 gehalten ist und der entlang einer an der Basis 18 vorgesehenen Führung 25 verlagerbar ist. Ein zweiter Arm 26 des Kniehebels 20 ist mit einem Festlager 28 verbunden und weist eine Handhabe 30 auf.

In der in Fig. 1 dargestellten Aktivstellung der Notausvorrichtung wird der Kniehebel 20 durch die Rückstellkräfte der an dem Betätigungselement 6 anliegenden Federeinrichtung 12 in eine erste Lagerposition gedrückt, in der der Schlitten 24 in nahezu maximaler Nähe zu dem Betätigungselement 6 positioniert ist und die Federeinrichtung 12 an diesem anliegt.

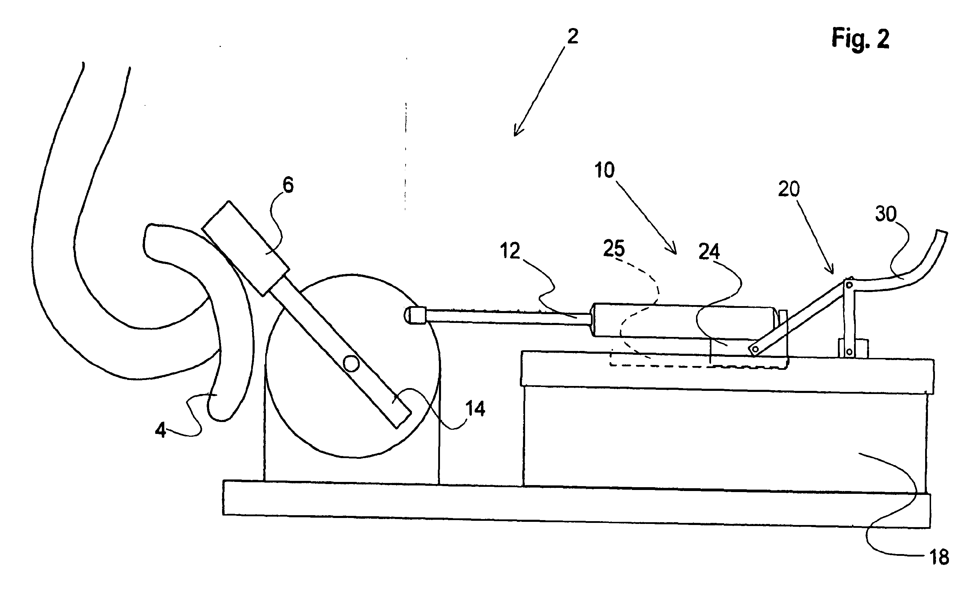

Mittels Betätigung der Handhabe 30 entlang Richtung B kann der Kniehebel 20 aus der ersten Lagerposition in eine zweite Lagerposition gemäß Fig. 2 verbracht werden, wobei gleichzeitig der Schlitten 24 entlang der Führung 25 in eine Position verbracht wird, in der er einen derart großen Abstand gegenüber dem Betätigungselement 6 aufweist, dass dieses von der Federeinrichtung 12 nicht mehr beaufschlagt werden kann. Die Notausvorrichtung 10 befindet sich somit in einer Passivstellung, in der keine Beaufschlagung des Fußpedals 4, wie Brems- oder Kupplungspedal, durch Krafteinwirkung der Notausvorrichtung erfolgen kann.

In gleicher Weise kann auch eine auf den abgewandten Arm 14 einwirkende Notausvorrichtung 10' gemäß Fig 1 von dem Betätigungselement 6 beabstandet werden, um diese an einem Gaspedal deaktivieren zu können.

## Patentansprüche

1. Aktuatorvorrichtung (2) zur Betätigung wenigstens eines Fußpedals (4) eines Kraftfahrzeugs
mit wenigstens einem Betätigungselement (6), das zur Beaufschlagung des Fußpedals (4) mittels eines Stellantriebes (8) zwischen einer Beaufschlagungsstellung und einer Freigabestellung verlagerbar ist und
mit einer Notausvorrichtung (10) mittels der das Fußpedal (4) in eine Notausstellung verbringbar ist,
wobei die Notausvorrichtung (10) an der Aktuatorvorrichtung (2) zwischen einer Aktivstellung und einer Passivstellung verstellbar gelagert ist,
**dadurch gekennzeichnet, dass** die Notausvorrichtung (10) in der Aktivstellung eine vom Stellantrieb (8) überwindbare Vorspannung an dem Betätigungselement (6) erzeugt, durch die das Fußpedal (4) mittels der Notausvorrichtung (10) in die Notausstellung verlagerbar ist,
und in der Passivstellung eine Verlagerung des Fußpedals (4) in die Notausstellung mittels der Notausvorrichtung (10) unterbunden ist.

2. Aktuatorvorrichtung nach Anspruch 1, **dadurch gekennzeichnet, dass** die Notausvorrichtung (10) eine Federeinrichtung (12) aufweist, die mittels einer Handhabe (30) zwischen der Aktivstellung und der Passivstellung verlagerbar ist.

3. Aktuatorvorrichtung nach Anspruch 2, **dadurch gekennzeichnet, dass** die Federeinrichtung (12) an einer verstellbaren Lagervorrichtung (16) gehalten ist und in der Aktivstellung eine Vorspannung aufweist, die die Lagervorrichtung (16) in eine erste Lagerposition drückt.

4. Aktuatorvorrichtung nach Anspruch 3, **dadurch gekennzeichnet, dass** die Lagervorrichtung (16) einen mittels der Handhabe (30) verstellbaren Kniehebel (20) aufweist.

5. Aktuatorvorrichtung nach Anspruch 3 oder 4, **dadurch gekennzeichnet, dass** die Lagervorrichtung einen zwischen der Aktivstellung und der Passivstellung verschiebbaren Schlitten (24) aufweist, an dem die Federeinrichtung (12) gehalten ist.

6. Aktuatorvorrichtung nach einem der Ansprüche 2 bis 5, **dadurch gekennzeichnet, dass** die Federeinrichtung (12) eine Gasdruckfeder aufweist.

7. Aktuatorvorrichtung nach einem der Ansprüche 1 bis 6, **dadurch gekennzeichnet, dass** das Betätigungselement (6) durch die Notausvorrichtung (10) in die Beaufschlagungsstellung vorspannbar ist.

8. Aktuatorvorrichtung nach einem der Ansprüche 1 bis 6, **dadurch gekennzeichnet, dass** das Betätigungselement (6) durch die Notausvorrichtung (10) in die Freigabestellung vorspannbar ist.

## Claims

1. Actuator device (2) for operating at least one foot pedal (4) of a motor vehicle
with at least one actuating element (6) which, for applying the foot pedal (4), is displaceable by means of an actuator drive (8) between an apply position and a release position and with an emergency stop device (10) by means of which the foot pedal (4) can be placed into an emergency stop position,
wherein the emergency stop device (10) is adjustably supported at the actuator device (2) between an active position and a passive position,
**characterised in that** the emergency stop device (10) in the active position generates a preload at the actuating element (6) which can be overcome by the actuator drive (8), whereby the foot pedal (4) can be displaced by said preload, by means of the emergency stop device (10), into the emergency stop position,
and, in the passive position, a displacement of the foot pedal (4) into the emergency stop position is prevented by means of the emergency stop device (10).

2. Actuator device according to claim 1, **characterised in that** the emergency stop device (10) has a spring device (12) which, by means of a handle (30), is displaceable between the active position and the passive position.

3. Actuator device according to claim 2, **characterised in that** the spring device (12) is held at an adjustable bearing device (16) and, in the active position, has a preload which pushes the bearing device (16) into a first bearing position.

4. Actuator device according to claim 3, **characterised in that** the bearing device (16) has a toggle lever (20) which can be adjusted by means of the handle (30).

5. Actuator device according to claim 3 or 4, **characterised in that** the bearing device has a slide (24) that is movable between the active position and the passive position, with the spring device (12) held at said slide.

6. Actuator device according to any one of claims 2 to 5, **characterised in that** the spring device (12) has a gas strut.

7. Actuator device according to any one of claims 1 to 6, **characterised in that** the actuating element (6) can be preloaded by the emergency stop device (10) into the apply position.

8. Actuator device according to any one of claims 1 to 6, **characterised in that** the actuating element (6) can be preloaded by the emergency stop device (10) into the release position.

## Revendications

1. Dispositif d'actuateur (2) pour la manoeuvre d'au moins une pédale d'un véhicule poids lourd
avec au moins un élément de manoeuvre (6), qui est déplaçable entre une position enfoncée et une position de repos lors de l'enfoncement de la pédale (4) au moyen d'un servomoteur (8), et
avec un dispositif d'arrêt d'urgence (10) par lequel la pédale (4) peut être amenée dans une position d'arrêt d'urgence,
dans lequel le dispositif d'arrêt d'urgence (10) sur le dispositif d'actuateur (2) peut être déplacé de façon réglable entre une position active et une position passive,
**caractérisé en ce que** le dispositif d'arrêt d'urgence (10) dans la position active produit pour l'élément de manoeuvre (6) une tension pouvant être vaincue par le servomoteur (8), tension par laquelle la pédale (4) peut être déplacée en position d'arrêt d'urgence au moyen du dispositif d'arrêt d'urgence (10)
et dans lequel un déplacement de la pédale (4) dans la position d'arrêt d'urgence par le dispositif d'arrêt d'urgence (10) est empêché dans la position passive.

2. Dispositif d'actuateur selon la revendication 1, **caractérisé en ce que** le dispositif d'arrêt d'urgence (10) présente un dispositif à ressort (12), qui est déplaçable entre la position active et la position passive par une manette (30).

3. Dispositif d'actuateur selon la revendication 2, **caractérisé en ce que** le dispositif à ressort (12) est fixé à un dispositif de support (16) réglable et présente dans la position active une tension, qui appuie le dispositif de support (16) dans une première position de support.

4. Dispositif d'actuateur selon la revendication 3, **caractérisé en ce que** le dispositif de support (16) présente un bras de genouillère (20) réglable au moyen de la manette (30).

5. Dispositif d'actuateur selon l'une des revendications 3 ou 4, **caractérisé en ce que** le dispositif de support présente un chariot (24) pouvant être déplacé entre la position active et la position passive, sur lequel est fixé le dispositif à ressort (12).

6. Dispositif d'actuateur selon l'une des revendications 2 à 5, **caractérisé en ce que** le dispositif à ressort (12) présente un ressort à pression de gaz.

7. Dispositif d'actuateur selon l'une des revendications 1 à 6, **caractérisé en ce que** l'élément de manoeuvre (6) peut être mis en tension à travers le dispositif d'arrêt d'urgence (10) dans la position d'enfoncement.

8. Dispositif d'actuateur selon l'une des revendications 1 à 6, **caractérisé en ce que** l'élément de manoeuvre (6) peut être mis en tension à travers le dispositif d'arrêt d'urgence (10) dans la position de repos.
